Europäisches Patentamt

(19) European Patent Office

Office européen des brevets

(11) Numéro de publication : **0 288 339 B1**

(12) **FASCICULE DE BREVET EUROPEEN**

(45) Date de publication du fascicule du brevet :
17.07.91 Bulletin 91/29

(51) Int. Cl.⁵ : **G01M 3/32**

(21) Numéro de dépôt : **88400658.6**

(22) Date de dépôt : **18.03.88**

(54) **Procédé pour tester l'étanchéité d'une cavité.**

(30) Priorité : 02.04.87 FR 8704608

(43) Date de publication de la demande :
26.10.88 Bulletin 88/43

(45) Mention de la délivrance du brevet :
17.07.91 Bulletin 91/29

(84) Etats contractants désignés :
AT DE ES GB IT SE

(56) Documents cités :
GB-A- 2 164 453

(73) Titulaire : SOCIETE DE TRAITEMENT
AUTOMATIQUE CONTROLE ET ETANCHEITE
"TRACE"
18, rue du Bélier Silic 526
F-94633 Rungis (FR)

(72) Inventeur : Cohen, Elie
8 bis /10 rue Lacharrière
F-75011 Paris (FR)

(74) Mandataire : Flavenot, Bernard
Société ABRITT 17, rue du Docteur Charcot La
Norville
F-91290 Arpajon (FR)

## Description

La présente invention concerne les procédés pour tester l'étanchéité d'une cavité réalisée en creux dans un corps, et plus particulièrement les procédés qui permettent de discriminer les cavités fuyardes de celles qui sont en communication avec des cavités secondaires du type "parasites" par un canal présentant une très forte perte de charge, mais qui ne sont pas fuyardes, ces cavités secondaires constituant ce que les techniciens dénomment "porosités".

En effet, dans différentes industries, il existe de nombreuses pièces comportant des cavités internes qui, pour jouer le rôle qui leur est attribué, doivent être étanches, ou du moins considérées comme étanches selon les règles admises en la matière.

Dans ce domaine, il existe déjà de nombreux procédés permettant de tester l'étanchéité d'une cavité, c'est-à-dire des procédés qui permettent de déterminer si la cavité est mise en communication, ou non, avec le milieu extérieur par des canaux de fuite ou analogues. La Demanderesse a d'ailleurs déjà mis au point un procédé pour effectuer de tels tests et a même déposé, le 10 Septembre 1984, une Demande de Brevet portant le numéro 84 13827. Ce procédé donne de très bons résultats quand la pièce est fuyarde ou non fuyarde.

Par contre, il existe des pièces qui pourraient être déterminées comme fuyardes, mais qui, en fait, ne le sont pas. Tel est le cas d'une pièce comportant, à côté de la cavité principale prévue et normale, une cavité secondaire "parasite" réunie à la cavité principale par un conduit présentant une perte de charge très importante. En effet, selon les procédés connus, et notamment celui mentionné ci-dessus, pour tester l'étanchéité de la cavité principale, on injecte un fluide sous pression dans cette cavité et, en fonction de la variation de pression, notamment à l'intérieur de cette cavité, on peut déterminer si elle est fuyarde ou non. Or, si cette cavité est réunie à une cavité secondaire par un conduit présentant une perte de charge très importante, la quantité de fluide qui peut passer de la cavité principale à la cavité secondaire peut être interprétée, d'après les mesures effectuées selon les procédés connus, comme une fuite, alors que cette cavité principale prise avec la cavité secondaire n'est peut-être pas fuyarde.

Bien entendu, on peut lever une telle indétermination. Pour cela, il faut attendre un temps suffisamment long pour que les pressions du gaz-test pénétré dans les deux cavités s'équilibrent. Cet équilibre atteint, il suffit de mesurer avec l'un des procédés connus pour tester l'étanchéité de la pièce.

Une telle procédure donne, évidemment, le résultat souhaité. Cependant, elle présente incontestablement l'inconvénient d'allonger assez fortement les temps de test, et donc d'augmenter le coût de revient global des pièces.

La présente invention a pour but de pallier les inconvénients mentionnés ci-dessus, en mettant en oeuvre un procédé qui permette de discriminer une pièce fuyarde d'une pièce non fuyarde ayant les caractéristiques mentionnées ci-avant, et ce, dans un temps relativement court, tout en conservant les procédés connus pour tester l'étanchéité des pièces qui, en général, donnent de très bons résultats, et très rapidement.

Plus précisément, la présente invention a pour objet un procédé pour tester l'étanchéité d'au moins une cavité dite "principale" réalisée dans un corps, caractérisé par le fait qu'il consiste à remplir ladite cavité principale par un gaz-test sous une pression déterminée, à mesurer la variation de pression de fuite dans ladite cavité principale, tout en réduisant par paliers, par une fuite contrôlée commandable, la pression à l'intérieur de ladite cavité principale, à étudier les différentes valeurs de la variation de pression de fuite, des valeurs égales étant représentatives d'une pièce pouvant être fuyarde et des valeurs diminuant d'une mesure à l'autre étant représentatives de la présence d'au moins une cavité secondaire communiquant avec ladite cavité principale par un conduit présentant une perte de charge importante, les deux dites cavités pouvant être non fuyardes.

D'autres caractéristiques et avantages de la présente invention apparaîtront au cours de la description suivante donnée en regard des dessins annexés à titre illustratif mais nullement limitatif, dans lesquels:
- la Figure 1 représente, sous forme schématique, des moyens de mise en oeuvre du procédé selon l'invention, et
- la Figure 2 représente une courbe permettant d'expliciter la mise en oeuvre du procédé avec les moyens selon la Figure 1.

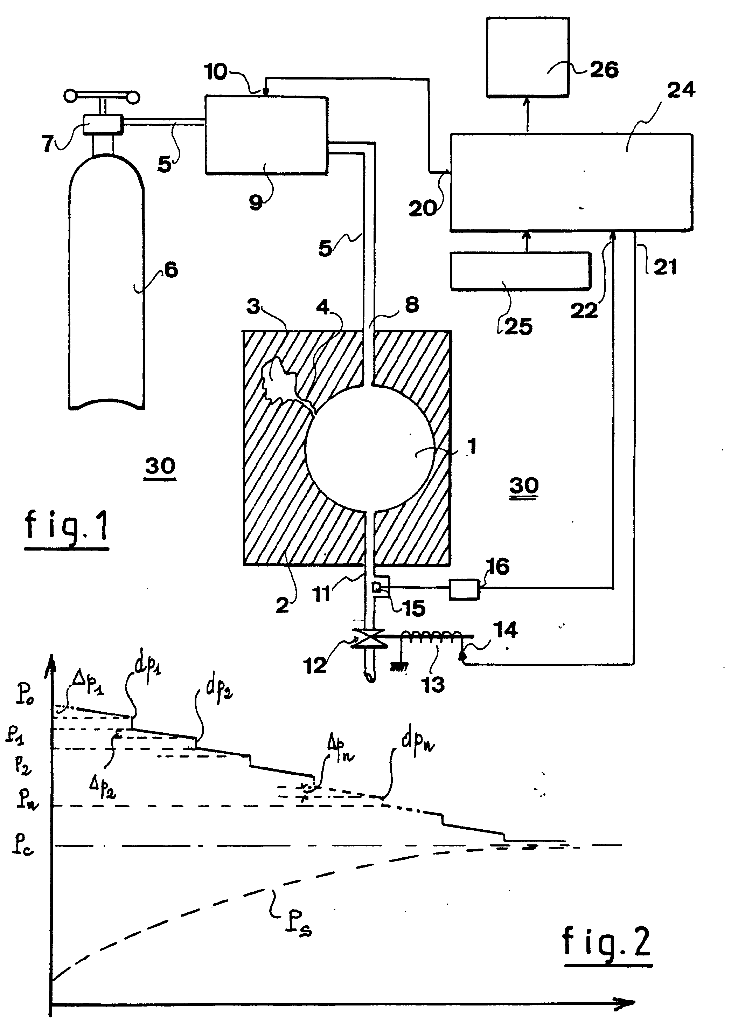

En revenant plus particulièrement à la Figure 1, à titre d'exemple, il est considéré qu'il est nécessaire d'effectuer des tests d'étanchéité d'une cavité 1 comprise dans une pièce 2, comme par exemple un cylindre dans un bloc moteur ou analogue, sans éliminer l'éventualité que cette cavité 1 puisse être en communication avec une cavité secondaire parasite 3 de faible volume par rapport à celui de la cavité 1 dite "principale" comme, par exemple, celles que l'on obtient lorsque l'on effectue la coulée d'une pièce et qu'il se produit, à l'intérieur de celle-ci, des inclusions, par exemple des bulles d'air emprisonnées, constituant des porosités. Il est supposé, dans ce cas, que cette cavité secondaire 3 est réunie à la cavité principale 1 part un conduit 4 ayant une très forte perte de charge.

Pour la mise en oeuvre du procédé, on réunit la cavité principale 1, par une conduit 5, à une source de gaz-test 6, par exemple une bouteille d'air comprimé, dont la sortie comportant un détendeur commandable 7 est réunie à l'entrée 8 de la cavité principale 1 par l'intermédiaire d'un moyen commandable d'obturation 9, ce moyen 9 pouvant être constitué par un clapet électromagnétique excitable sur une entrée 10. La cavité principale 1 est reliée à l'extérieur par une deuxième conduite 11 qui peut d'ailleurs avoir une partie commune avec la conduite 5, mais qui, pour des facilités de représentation, en a été dissociée. Cette conduite 11 est obturée par une électrovanne commandable 12 au moyen, par exemple, d'un relais électromagnétique 13 apte à être alimenté à son entrée 14 par un signal électrique.

Dans un milieu représentatif de celui contenu dans la cavité principale 1, par exemple, en sortie, dans la conduite 11, est disposé un capteur de pression 15 dont la sortie de mesure 16 peut être reliée à tout organe de traitement de signaux électroniques.

Pour la facilité de la mise en oeuvre du procédé, les entrées 10, 14 et sortie 16 sont réunies respectivement à des sorties 20, 21 et entrée 22 d'un organe de traitement du type micro-ordinateur 24 à microprocesseur comportant, en plus, des moyens de commande 25 et, éventuellement, un organe d'affichage 26 du type écran de visualisation ou analogue.

La mise en oeuvre du procédé est donc la suivante :

Dans une première étape, l'électrovanne 12 est fermée et on commande l'ouverture du clapet commandable 9, de façon à introduire dans la cavité principale 1 une certaine quantité de gaz-test, jusqu'à obtenir dans cette cavité une pression déterminée dont la valeur est représentée sur la Figure 2 par la valeur origine Po, par exemple 1020 millibars. Dans un souci de simplification, la montée en pression dans la cavité principale 1 n'a pas été représentée sur la courbe de la Figure 2.

On effectue alors une première mesure $\Delta P1$ de variation de pression de fuite selon l'un des procédés connus. Au bout d'un temps de l'ordre de quelques secondes, par exemple quatre, on abaisse la pression à l'intérieur de la cavité principale 1 d'une très faible quantité, par exemple d'une première valeur dP1 comme celle représentée sur la Figure 2, pour amener la pression à la valeur P1. On effectue alors une deuxième mesure $\Delta P2$ de la variation de pression de fuite.

On recommence ainsi des diminutions de pression à l'intérieur de la cavité principale en passant successivement à P2, P3,..., Pn, en effectuant à chaque fois une mesure de la variation de pression de fuite, $\Delta P3$, $\Delta P4$,..., $\Delta Pn$. Ce nombre "n" dépend du résultat de la comparaison des mesures de variation de pression de fuite et d'une valeur seuil $\Delta P$ au-delà de laquelle une pièce est déclarée fuyarde, et aussi des mesures entre elles.

En effet, si l'on a $\Delta P1 \simeq \Delta P2 > \Delta P$, la cavité 1 perd régulièrement la même quantité de gaz-test entre deux diminutions imposées successives de la pression, et cette quantité est supérieure à celle du seuil de fuite prédéterminé. La pièce est déclarée fuyarde et le test peut être arrêté dès que n = 2 ou 3.

Bien entendu, si l'on a $\Delta P1 \simeq \Delta P2 < \Delta P$, la cavité est déclarée non fuyarde et le test est également arrêté à n = 2 ou 3.

Par contre, si l'on a $\Delta P1 > \Delta P2 > \Delta P$, on déduit que la cavité 1 est en communication avec au moins une cavité secondaire "parasite" 3 par un conduit 4 présentant une forte perte de charge, mais on ne peut pas conclure sur l'étanchéité de l'ensemble. En effet, le fait que $\Delta P2$ soit inférieure à $\Delta P1$ implique un ralentissement d'un écoulement du gaz-test hors de la cavité 1. Ce ralentissement ne peut être le fait d'une fuite, car il serait contraire à la définition même d'une fuite. Il ne peut être expliqué que par la présence d'au moins une cavité secondaire "parasite" de faible volume par rapport à celui de la cavité principale 1 et en communication avec celle-ci par un conduit 4 présentant une forte perte de charge. Dans ce cas, le gaz-test introduit dans la cavité principale s'écoule dans la cavité secondaire (augmentation de Ps sur la Figure 2), en se superposant peut-être à une fuite, et cet écoulement se ralentit à mesure que les pressions à l'intérieur des deux cavités s'approchent de l'équilibre Pc.

Pour que le test permette de mettre en évidence la présence, ou non, d'une fuite, il faut donc pouvoir effectuer des mesures $\Delta Pn$ lorsque la pression dans la cavité principale est relativement proche de l'état d'équilibre Pc. Il faut donc produire d'autres paliers de pression dans la cavité 1, ces paliers permettant de s'approcher plus rapidement de l'état d'équilibre, et donc de pouvoir tester l'étanchéité seule plus rapidement.

Par exemple, un résultat de comparaison tel que le suivant :

$$\Delta P1 > \Delta P2 > \Delta P3 > \Delta P4 > \Delta P > \Delta P5 \simeq \Delta P6$$

permet d'affirmer que la pièce testée n'est pas fuyarde, bien que les premières mesures de pression de fuite auraient pu conduire à son rejet, en la laissant croire fuyarde.

Il apparaît donc que le procédé décrit ci-dessus permet bien de discriminer un corps fuyard d'un corps ayant la caractéristique mentionnée ci-avant non fuyard.

Bien entendu deux cavités réunies par un canal sans perte de charge importante ne pose pas de problème, le procédé de test considérant alors ces deux cavités comme n'en constituant qu'une seule.

Dans une mise en oeuvre avantageuse du procédé, la pression initiale est légèrement supérieure à mille millibars, les amplitudes des diminutions de pression imposées sont de l'ordre de quelques millièmes de la valeur de la pression initiale de test, la périodicité de ces diminutions de pression imposées est de l'ordre de quatre secondes. En général, sept paliers sont suffisants pour pouvoir conclure sur la qualité de la pièce testée.

Dans la pratique, l'amplitude de la diminution imposée de la pression n'est pas obligatoirement constante. En effet, il faut que ces diminutions de pression permettent de tendre assez rapidement vers l'état d'équilibre Pc, mais de ne pas le dépasser, les dernières mesures du test étant celles qui permettent de qualifier la pièce de fuyarde ou non fuyarde. En particulier, lorsque les valeurs des variations de pression de fuite diminuent très rapidement, cela signifie que l'écoulement du gaz-test dans la cavité secondaire 3 se ralentit très rapidement, que l'état d'équilibre Pc est très proche et risque d'être dépassé par une prochaine diminution imposée de la pression qui peut entraîner un vidage partiel de la cavité 3 dans la cavité 1. La mise en évidence, par le capteur 15, d'une fuite éventuelle serait alors rendue impossible.

Dans le cas, donc, où la diminution entre deux valeurs successives de variation de pression de fuite est très rapide, l'amplitude de la diminution imposée dPn est choisie plus petite. Par exemple, si l'on a $\Delta P1 \gg \Delta P2 > \Delta P$, mais avec $\Delta P2 < 1,5\ \Delta P$, on prendra, par exemple, $dP2 \simeq 1/2\ dP1$.

On voit donc l'intérêt d'un tel procédé : il permet, tout en utilisant les procédés connus de test d'étanchéité, de mettre en évidence le fait que certaines pièces ne sont pas fuyardes, mais possèdent simplement des porosités qui donnaient des résultats de mesures, selon ces procédés, faisant croire qu'elles étaient fuyardes. Le procédé selon l'invention n'augmente que de très peu le temps habituellement nécessaire aux mesures, puisqu'il est mis en oeuvre dès la fin de la montée en pression du gaz-test, sans attendre l'éventuel équilibre des pressions dans les cavités mises en communication. Il permet donc de conserver des pièces qui, par manque de temps, étaient mises au rebut, alors qu'elles étaient potentiellement non fuyardes, permettant ainsi d'augmenter la rentabilité d'une fabrication.

## Revendications

1. Procédé pour tester l'étanchéité d'au moins une cavité (1) dite "principale" réalisée dans un corps (2) en déterminant si ladite cavité est fuyarde ou non, ou si elle n'est que reliée à au moins une cavité (3) dite "secondaire" réalisée dans ledit corps, ledit procédé consistant tout d'abord à remplir ladite cavité principale avec un gaz-test (6) sous une pression déterminée Po, caractérisé par le fait qu'il consiste en outre:
à réduire par paliers dPn, par une fuite contrôlée commandable, la pression à l'intérieur de ladite cavité principale,
à mesurer les variations de pression de fuite dans ladite cavité principale ($\Delta P1$, $\Delta P2$,..., $\Delta Pn$),
à comparer lesdites variations de pression de fuite avec une valeur seuil ($\Delta P$), et

à déduire de cette comparaison si la cavité principale est fuyarde ou non, ou si elle est reliée à une cavité secondaire, des variations successives ($\Delta P1$, $\Delta P2$,...) sensiblement égales entre elles mais supérieures à ladite valeur seuil ($\Delta P$) permettant de déclarer que ladite cavité principale est fuyarde, des variations successives sensiblement égales entre elles mais inférieures à ladite valeur de seuil permettant de déclarer que ladite cavité principale est non fuyarde, des variations successives de valeurs décroissantes tout en restant inférieures à ladite valeur seuil permettant de déclarer que ladite cavité principale est reliée à une cavité secondaire par une perte de charge importante.

2. Procédé selon la revendication 1, caractérisé par le fait que les réductions par paliers de la pression déterminée Po ont une amplitude dPn qui est fonction des valeurs de la variation de pression de fuite.

3. Procédé selon l'une des revendications 1 et 2, caractérisé par le fait que l'amplitude desdites réductions est égale à quelques millièmes de la valeur de ladite pression déterminée Po.

4. Procédé selon l'une des revendications 1 à 3, caractérisé par le fait que la périodicité des réductions de ladite pression est de l'ordre de quatre secondes.

5. Procédé selon l'une des revendications 1 à 4, caractérisé par le fait que le nombre de réductions de pression est sensiblement égal à sept.

## Patentansprüche

1. Verfahren zur Dichtheitsprüfung mindestens eines, als Haupthohlraum bezeichneten Hohlraums (1), der in einem Korpus (2) ausgebildet ist durch Bestimmen, ob der Hohlraum undicht ist oder nicht oder ob er nur mit mindestens einem als Sekundärhohlraum bezeichneten Hohlraum (3), der sich in dem Korpus befindet, verbunden ist, welches Verfahren darin besteht, daß zunächst der Haupthohlraum mit einem Prüfgas (6) unter einem bestimmten Druck gefüllt wird, dadurch gekennzeichnet, daß das Verfahren ferner umfaßt :
Abbauen des Drucks im Inneren des Haupthohlraums in Stufen dpn über ein gesteuertes kontrolliertes Leck,
Messen der Druckänderungen des Lecks in dem Haupthohlraum ($\Delta P1$, $\Delta P2$,...,$\Delta Pn$),
Vergleichen der Leckdruckänderungen mit einem Schwellenwert ($\Delta P$), und
Ableiten aus diesem Vergleich, ob der Haupthohlraum leckbehaftet ist oder nicht oder ob er mit einem Sekundärhohlraum verbunden ist, wobei aufeinanderfolgende Änderungen ($\Delta P1$, $\Delta P2$), die im wesentlichen untereinander gleich sind, jedoch größer sind als der Schwellenwert ($\Delta P$) die Aussage erlauben, daß der Haupthohlraum ein Leck aufweist, wobei aufeinanderfolgende Veränderungen, die untereinander im wesentlichen gleich sind, jedoch kleiner sind als der Schwellenwert, die Aussage erlauben, daß der Haupthohlraum kein Leck aufweist, und wobei aufeinanderfolgende Veränderungen mit abnehmender Größe, jedoch unterhalb des Schwellenwerts, die Aussage erlauben, daß der Haupthohlraum mit einem Sekundärhohlraum über einen erheblich druckabbauend wirkenden Kanal verbunden ist.

2. Verfahren nach Anspruch 1, dadurch gekennzeichnet, daß der stufenweise Abbau des vorbestimmten Druckes Po mit einer Amplitude dPn erfolgt, die eine Funktion des Werts der Leckdruckänderung ist.

3. Verfahren nach einem der Ansprüche 1 und 2, dadurch gekennzeichnet, daß die Amplitude des Druckabbaus gleich einigen Tausendsteln des Werts des vorbestimmten Druckes Po ist.

4. Verfahren nach einem der Ansprüche 1 bis 3, dadurch gekennzeichnet, daß die Periodizität des Abbaus des Druckes in der Größenordnung von vier Sekunden liegt.

5. Verfahren nach einem der Ansprüche 1 bis 4, dadurch gekennzeichnet, daß die Anzahl der Druckabbaustufen im wesentlichen gleich sieben ist.

## Claims

1. Method of leak testing at least one "main" cavity (1) formed in a body (2) by way of determining either said cavity is leaky or not, or either it is connected with at least one "secondary" cavity (3) formed in said body, said method consisting at first in filling said main cavity with a test gas (6) at a determined pressure Po, characterized by the fact that it further consists :
in reducing the pressure inside said main cavity in steps dpn by means of a switchable controlled leak,
in measuring the leakage pressure variations in said main cavity ($\Delta P1, \Delta P2,...,\Delta Pn$),
in comparing said leakage pressure variations with a threshold value ($\Delta P$), and
in deducing from this comparison either said main cavity is leaky or not, or either it is connected with a secondary cavity, successive substantially equal variations ($\Delta P1, \Delta P2,...$), but superior to said threshold value ($\Delta P$), being representative of a leaky main cavity, successive substantially equal variations, but inferior to said threshold value, being representative of a non-leaky main cavity, successive decreasing variations while they are inferior to said threshold value being representative of a main cavity being connected with a secondary cavity via a high head loss.

2. Method according to claim 1, characterized by the fact that the step reductions of the determined pressure Po have an amplitude dPn that is a function of the values of leakage pressure variation.

3. Method according to claim 1 or 2, characterized by the fact that the amplitude of said reductions is equal to a few thousandths of the value of said determined pressure Po.

4. Method according to any one of claims 1 to 3, characterized by the fact that the periodicity of said pressure reductions is about four seconds.

5. Method according to any one of claims 1 to 4, characterized by the fact that the number of pressure reductions is substantially equal to seven.

fig.1

fig.2